Europäisches Patentamt

European Patent Office

Office européen des brevets

(19)

(11) Veröffentlichungsnummer : **0 334 140 B1**

(12) **EUROPÄISCHE PATENTSCHRIFT**

(45) Veröffentlichungstag der Patentschrift :
17.06.92 Patentblatt 92/25

(51) Int. Cl.⁵ : **A47J 31/00, A47J 31/40**

(21) Anmeldenummer : **89104353.1**

(22) Anmeldetag : **11.03.89**

(54) **Kaffeemaschine mit einer Brühkammer.**

(30) Priorität : **25.03.88 DE 3810143**

(43) Veröffentlichungstag der Anmeldung :
**27.09.89 Patentblatt 89/39**

(45) Bekanntmachung des Hinweises auf die
Patenterteilung :
**17.06.92 Patentblatt 92/25**

(84) Benannte Vertragsstaaten :
**AT BE CH DE ES FR GB GR IT LI LU NL SE**

(56) Entgegenhaltungen :
**CH-A- 402 319**
**DE-A- 2 657 355**
**US-A- 2 935 011**
**US-A- 3 203 340**

(73) Patentinhaber : **Melitta Haushaltsprodukte**
**GmbH & Co. Kommanditgesellschaft**
**Ringstrasse 99**
**W-4950 Minden 1 (DE)**

(72) Erfinder : **Neunast, Horst**
**Hainweg 12**
**W-4950 Minden (DE)**
Erfinder : **Schmalkuche, Jens**
**Dresdner Strasse 2**
**W-4803 Steinhagen (DE)**

(74) Vertreter : **Stracke, Alexander, Dipl.-Ing. et al**
**Jöllenbecker Strasse 164**
**W-4800 Bielefeld 1 (DE)**

Jouve, 18, rue Saint-Denis, 75001 PARIS

## Beschreibung

Die vorliegende Erfindung betrifft eine Kaffeemaschine mit einer Brühkammer, die eine Einfüllventilöffnung, einen Einfüllstutzen, eine Ablaufventilöffnung zu einem Ablauf, eine Öffnung zu einer Kaffeeleitung und einen Brühwasserzufluß aufweist und in welcher ein ortsfestes Trägersieb sowie ein den Brühvorgang steuernder Ventilkolben verschiebbar angeordnet sind, wobei das Trägersieb einen Auffangraum für Kaffeebrühe um die Öffnung der Kaffeeleitung von der übrigen Brühkammer trennt.

Eine Kaffeemaschine der vorerwähnten Art ist beispielsweise aus der CH-PS 402 319 bekannt.

Der Ventilkolben ist bei dieser Kaffeemaschine zentral in der Brühkammer angeordnet und durchtritt das Trägersieb ebenfalls zentral.

Dadurch wird einerseits die nutzbare Filterfläche beträchtlich verrringert und andererseits ist mit einer derartigen Konstruktion der Nachteil verbunden, daß der Ventilkolben während des eigentlichen Brühvorganges dem Brühwasser Wärme entzieht.

Der vorliegenden Erfindung liegt die Aufgabe zugrunde, eine Kaffeemaschine der gattungsgemäßen Art dahingehend zu verbessern, daß eine Beeinträchtigung des Brühvorganges durch den Ventilkolben weitestgehend vermieden und die Reinigungsmöglichkeiten der Brühkammer verbessert werden.

Diese Aufgabe wird erfindungsgemäß dadurch gelöst, daß der Ventilkolben außerhalb der Grundfläche des Trägersiebes angeordnet ist und die Ablaßventilöffnung oberhalb des Trägersiebes quer zur Längsachse des Ventilkolbens verlaufend angebracht ist.

Durch die Verlegung des Ventilkolbens in einen Bereich außerhalb des Trägersiebes wird einerseits erreicht, daß die gesamte Grundfläche des Trägersiebes für Brühzwecke genutzt werden kann und andererseits ein nennenswerter Kontakt des Ventilkolbens mit dem heißen Brühwasser verhindert wird. Damit wird auch verhindert, daß der Ventilkolben dem Brühwasser Wärme entziehen kann.

Die Verlegung der Ablaßventilöffnung in den Bereich oberhalb des Trägersiebes und quer zur Längsachse des Ventilkolbens erleichtert insgesamt die notwendige Reinigung der Brühkammer nach einem vollständigen Brühvorgang.

Eine vorteilhafte Weiterbildung der Erfindung besteht darin, daß die Brühkammer in dem Bereich unterhalb des Trägersiebes geteilt ist und einen gegenüber der übrigen Brühkammer beweglichen Schließteller aufweist, an dessen tiefster Stelle die Öffnung der Kaffeeleitung angeordnet ist und der in seinem dicht an die Brühkammerwandung andrückbaren oberen Randbereich eine Auflage für ein Filterpapier aufweist.

Durch die Teilung der Brühkammer und den beweglich angeordneten Schließteller wird die Verwendung eines Filterpapieres ermöglicht, was beispielsweise bei einem das Trägersieb zentral durchtretenden Ventilkolben undenkbar wäre.

Durch das Filterpapier werden die noch durch das Trägersieb gelangenden feinen Anteile und Schwebeteilchen des Kaffees ausgefiltert, was positive Auswirkungen auf Geschmack und Verträglichkeit des hergestellten Kaffees hat.

Weitere Ausgestaltungen von Merkmalen der Erfindung sind Gegenstand weiterer Unteransprüche.

Ein Ausführungsbeispiel der Erfindung ist in den beigefügten Zeichnungen dargestellt und wird im folgenden näher beschrieben.

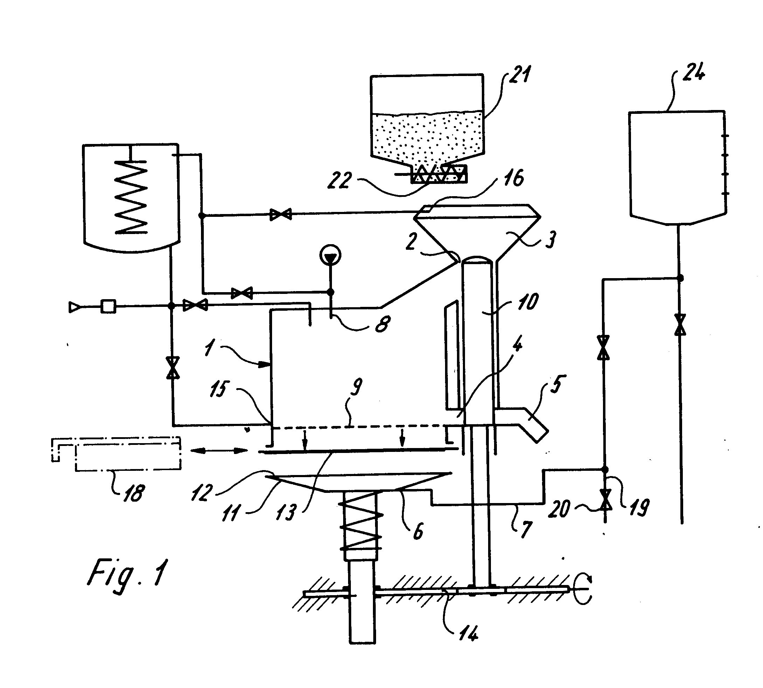

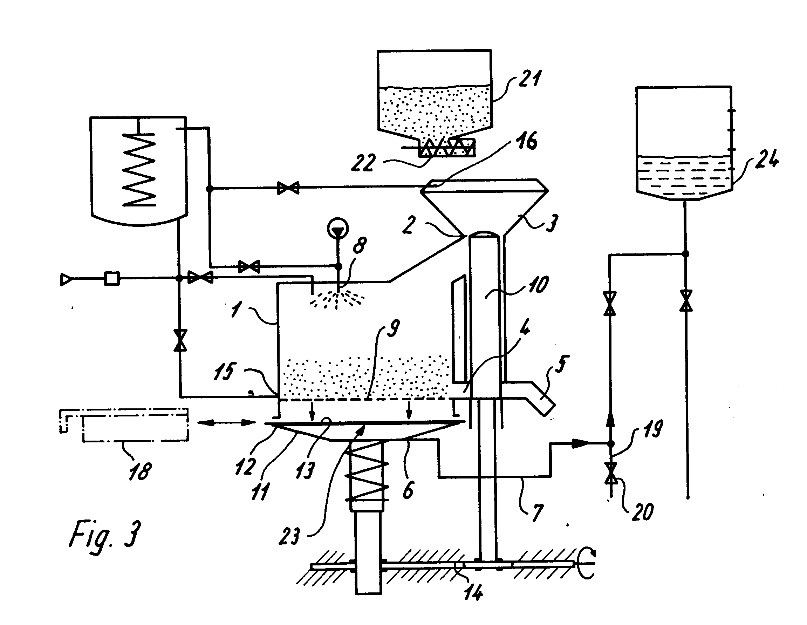

Die Fig. 1 bis 5 zeigen schematisch dargestellte Funktionsschaubilder einer erfindungsgemäßen Kaffeemaschine in jeweils unterschiedlichen Betriebszuständen.

In allen Figuren ist mit dem Bezugszeichen 1 generell eine Brühkammer einer Kaffeemaschine bezeichnet. Diese Brühkammer 1 weist eine Einfüllventilöffnung 2, einen Einfüllstutzen 3, eine Ablaßventilöffnung 4 zu einem Ablauf 5, eine Öffnung 6 zu einer Kaffeeleitung 7 und einen Brühwasserzufluß 8 auf.

Innerhalb der Brühkammer 1 ist ein ortsfestes Trägersieb 9 angeordnet und über einen verschiebbar angeordneten Ventilkolben 10 ist der Brühvorgang der gesamten Kaffeemaschine steuerbar.

Unterhalb des Trägersiebes 9 ist die Brühkammer geteilt und weist einen gegenüber der übrigen Brühkammer beweglichen Schließteller 11 auf. Dieser Schließteller 11 ist mit seinem oberen Randbereich 12, dicht an die Brühkammerwandung andrückbar und weist in diesem oberen Randbereich eine Auflage für Filterpapier 13 auf.

Wie deutlich erkennbar ist, ist der Ventilkolben 10 außerhalb der Grundfläche des Trägersiebes 9 angeordnet und die Ablaßventilöffnung 4 verläuft oberhalb des Trägersiebes 9 quer zur Längsachse des Ventilkolbens 10.

Die Öffnung 6 der Kaffeeleitung 7 ist an der tiefsten Stelle des Schließtellers 11 angebracht.

Ventilkolben 10 und Schließteller 11 sind an einem gemeinsamen Kurbeltrieb 14 angeschlossen und somit hinsichtlich ihrer möglichen Verschiebungen mechanisch miteinander gekoppelt. Hierbei wird der Schließteller 11 über eine Nokkenscheibe gesteuert.

In die Brühkammer 1 mündet oberhalb des Trägersiebes 9 und parallel zum Trägersieb 9 verlaufend eine

2

EP 0 334 140 B1

Reinigungswasseröffnung 15 ein.

Diese Reinigungswasseröffnung 15 liegt der Ablaßventilöffnung 4 vorzugsweise diametral gegenüber.

Im Bereich des Einfüllstutzens 3 mündet eine Wassereinspülöffnung 16 in diesen Füllstutzen 3 ein. Die Beschickung des Schließtellers 11 mit Filterpapier 13 kann in bekannter Weise mittels einer Kassette 18, die durch strichpunktierte Linien dargestellt ist, erfolgen.

Die Kaffeeleitung 7 weist eine Ablaßöffnung 19 auf, welche mittels eines Ventiles 20 freigebbar oder verschließbar ist.

Oberhalb des Einfüllstutzens 3 ist ein Granulatbehälter 21 mit einer Dosiervorrichtung 22 angeordnet, wobei die Öffnung der Dosiervorrichtung 22 etwa zentral oberhalb des Einfüllstutzens 3 angeordnet ist.

Aus der vorstehend beschriebenen Konstruktion der gesamten Kaffeemaschine ergeben sich die nachfolgend geschilderten Abläufe bei deren Benutzung.

In Fig. 1 ist eine Grundstellung der Kaffeemaschine gezeigt, d.h. die Kaffeemaschine ist bereit für die Durchführung eines Brühvorganges und einen anschließenden Reinigungszyklus.

In dieser Grundstellung ist der Schließteller 11 gegenüber der übrigen Brühkammer 1 abgesenkt, so daß die Beschickung des Schließtellers 11 mit Filterpapier 13 möglich wird.

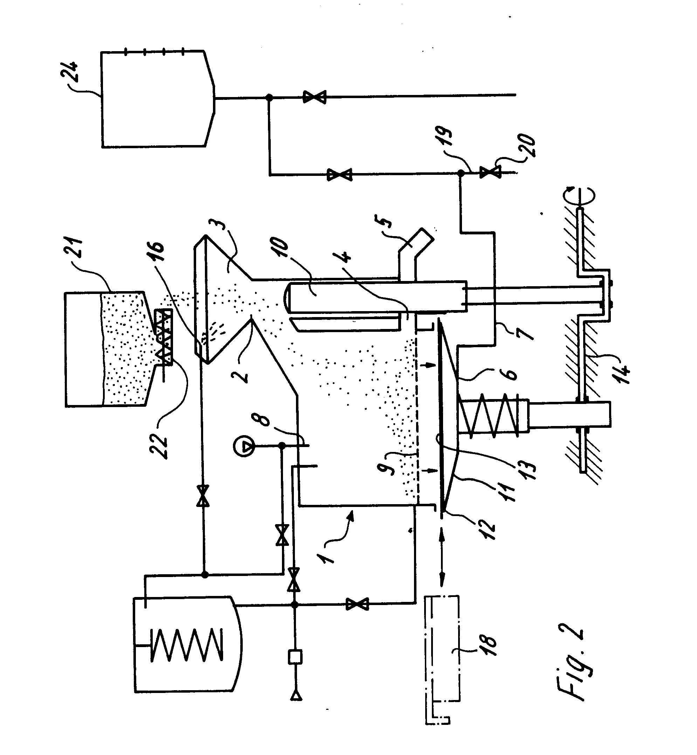

Durch Betätigung des Kurbeltriebes 14 wird nun in einem nächsten Arbeitsschritt der Ventilkolben 10 nach unten bewegt und gleichzeitig der Schließteller 11 nach oben in seine Dichtstellung gegenüber der Brühkammer 1 verfahren. Der abgesenkte Ventilkolben 10 gibt die Einfüllventilöffnung 2 des Einfüllstutzens 3 frei, während die Ablaßventilöffnung 4 geschlossen bleibt. In dieser in Fig. 2 gezeigten Stellung wird Kaffeemehl in die Brühkammer 1 eingefüllt. Nach beendetem Einfüllen des Kaffeemehles wird die Wassereinspülöffnung 16 kurzfristig geöffnet und im Einfüllstutzen 3 befindliches Kaffeemehl noch zusätzlich in die Brühkammer gespült und der Einfüllstutzen 3 dabei gleichzeitig gereinigt.

Anschließend wird der Kurbeltrieb 14 erneut betätigt, wobei in diesem Falle ausschließlich der Ventilkolben 10 wieder nach oben gefahren wird, so daß die Einfüllventilöffnung 2 des Einfüllstutzens 3 geschlossen ist. Nunmehr wird der Brühwasserzufluß 8 freigegeben und Brühwasser in die Brühkammer 1 eingefüllt.

Unterhalb des Filterpapieres 13 sammelt sich in einem Auffangraum 23 das Kaffeegetränk und gelangt über die Öffnung 6 und die Kaffeeleitung 7 in einen der dargestellten Sammelbehälter 24.

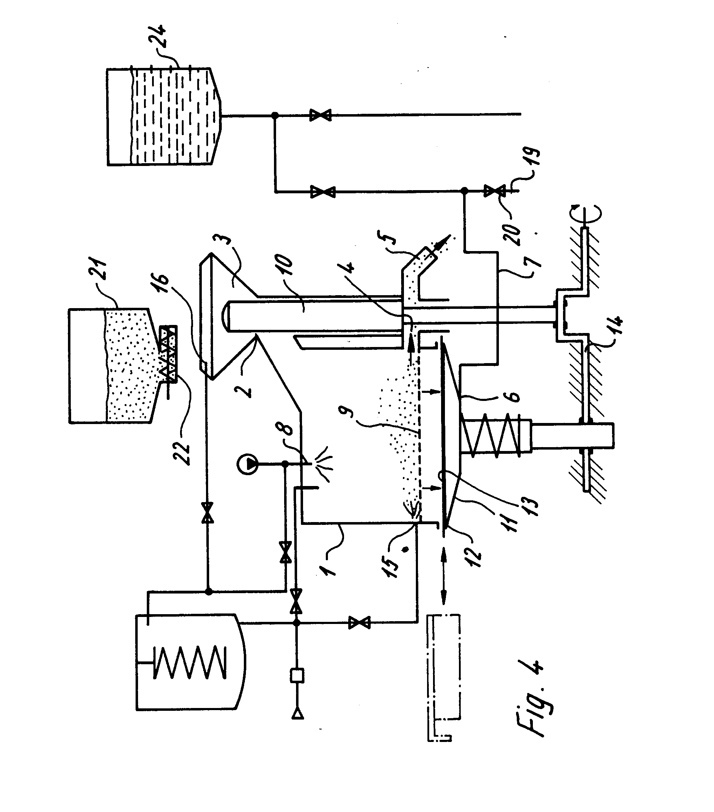

Sobald der gesamte Brühvorgang abgeschlossen ist, wird durch weitere Betätigung des Kurbeltriebes 14 der Ventilkolben 10 weiter angehoben, so daß nunmehr die Ablaßventilöffnung 4 freigegeben wird. Dies ist in Fig. 4 dargestellt.

Auch in dieser Arbeitsposition ist der Schließteller 11 noch an die Brühkammer 1 angedrückt.

Durch Freigabe der Reinigungswasseröffnung 15 kann nun Reinigungswasser in die Brühkammer 1 gefördert werden und die Brühkammer 1 gereinigt werden, d.h., das auf dem Trägersieb 9 aufliegende Kaffeemehl kann durch die Ablaßventilöffnung 4 und den Ablauf 5 entsorgt werden. Da während dieses Reinigungsvorganges schon Reinigungswasser in die Kaffeeleitung 7 eintreten kann, ist während des Reinigungsvorganges auch das Ventil 20 der Ablaßöffnung 19 der Kaffeeleitung 7 geöffnet, d.h., daß das Reinigungswasser ausschließlich aus der Ablaßöffnung 19 der Kaffeeleitung 7 austreten kann.

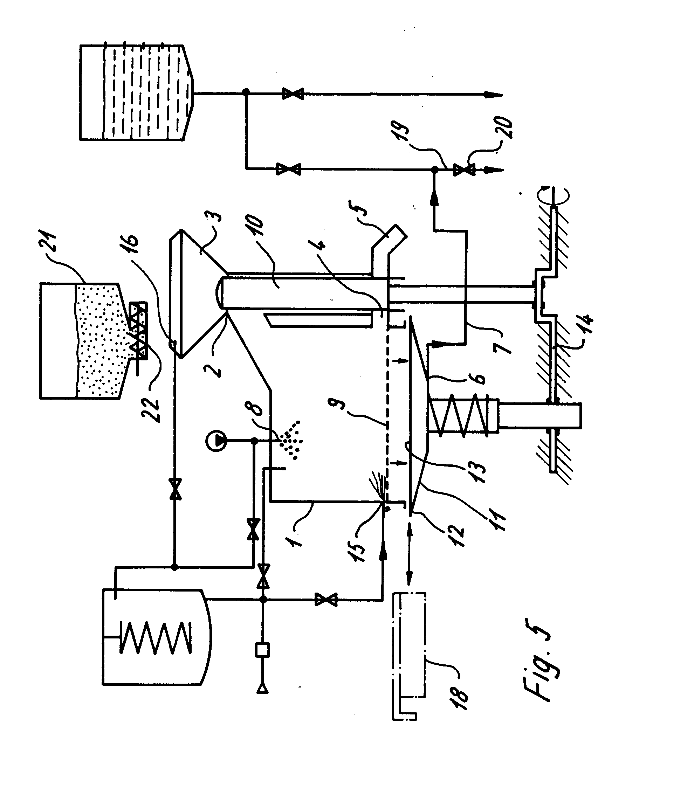

Nach dieser Reinigung der Brühkammer 1 im Bereich oberhalb des Trägersiebes 9 wird der Kurbeltrieb 14 erneut betätigt und der Ventilkolben 10 in eine Stellung gebracht, in der die Ablaßventilöffnung 4 des Ablaufes 5 wieder geschlossen ist. Diese Position ist in Fig. 5 dargestellt. Nun wird weiter Reinigungsflüssigkeit und gleichzeitig Druckluft in die Brühkammer 1 gefördert, so daß nunmehr sämtliche Flüssigkeit unter entsprechendem Druck ausschließlich über die Öffnung 6 und die Kaffeeleitung 7 aus der Ablaßöffnung 19 der Kaffeeleitung 7 austreten kann.

Die Zufuhr von Reinigungsflüssigkeit erfolgt nur kurzzeitig, so daß anschließend ausschließlich Druckluft in die Brühkammer 1 gefördert wird. Diese Druckluft sorgt für eine relativ intensive Trocknung aller druchströmten Bereiche und insbesondere zu einer Trocknung der auf dem Filterpapier 13 abgesetzten feinen Kaffee-Anteile bzw. der dort abgesetzten Schwebeteilchen.

Anschließend wird durch erneute Betätigung des Kurbeltriebes 14 wieder die in Fig. 1 gezeigte Grundstellung herbeigeführt, so daß nun das benutzte Filterpapier 13 entnommen und ein neues Filterpapier 13 eingesetzt und somit die gesamte Kaffeemaschine für einen weiteren Arbeitszyklus bereitgemacht werden kann.

Die Verwendung eines Kurbeltriebes 14 zur Steuerung von Ventilkolben 10 und Schließteller 11 bringt den Vorteil mitsich, daß die Stellung des Ventilkolbens 10 über einen Drehwinkelgeber abfahrbar ist, so daß auch nach einer Betriebsunterbrechung jeweils die aktuelle Stellung des Ventilkolbens 10 sicher ermittelt und somit Fehlfunktionen vermieden werden können.

## Patentansprüche

1. Kaffeemaschine mit einer Brühkammer (1), die eine Einfüllventilöffnung, (2), einen Einfüllstutzen (3), eine Ablaßventilöffnung (4) zu einem Ablauf (5), eine Öffnung (6) zu einer Kaffeeleitung (7) und einen Brühwasserzufluß aufweist und welcher ein ortsfestes Trägersieb (9) sowie ein den Brühvorgang steuernder Ventilkolben (10) verschiebbar angeordnet sind, wobei das Trägersieb (9) einen Auffangraum (23) für Kaffeebrühe um die Öffnung (6) der Kaffeeleitung (7) von der übrigen Brühkammer trennt, **dadurch gekennzeichnet,** daß der Ventilkolben (10) außerhalb der Grundfläche des Trägersiebes (9) angeordnet ist und die Ablaßventilöffnung (4) oberhalb des Trägersiebes (9) quer zur Längsachse des Ventilkolbens (10) verlaufend angebracht ist.

2. Kaffeemaschine nach Anspruch 1, dadurch gekennzeichnet, daß die Brühkammer (1) in dem Bereich unterhalb des Trägersiebes (9) geteilt ist und einen gegenüber der übrigen Brühkammer (1) beweglichen Schließteller (11) aufweist, an dessen tiefster Stelle die Öffnung (6) der Kaffeeleitung (7) angeordnet ist und der in seinem dicht an die Brühkammerwandung andrückbaren oberen Randbereich (12) eine Auflage für ein Filterpapier (13) aufweist.

3. Kaffeemaschine nach Anspruch 1 oder 2, dadurch gekennzeichnet, daß das Trägersieb (9) eben ausgebildet und horizontal liegend in der Brühkammer (1) angebracht ist.

4. Kaffeemaschine nach einem oder mehreren der vorhergehenden Ansprüche, dadurch gekennzeichnet, daß oberhalb des Trägersiebes (9) und parallel zum Trägersieb (9) verlaufend eine Reinigungswasseröffnung (15) in die Brühkammer (1) einmündet.

5. Kaffeemaschine nach Anspruch 4, dadurch gekennzeichnet, daß die Reinigungswasseröffnung (15) der Ablaßventilöffnung (4) diametral gegenüberliegt.

6. Kaffeemaschine nach einem oder mehreren der vorhergehenden Ansprüche, dadurch gekennzeichnet, daß Ventilkolben (10) und Schließteller (11) an einem gemeinsamen Kurbeltrieb (14) angeschlossen und somit hinsichtlich ihrer möglichen Verschiebungen mechanisch gekoppelt sind.

7. Kaffeemaschine nach Anspruch 6, dadurch gekennzeichnet, daß der Schließteller (11) mittels einer vom Kurbeltrieb (14) betätigten Nockenscheibe gesteuert ist.

8. Kaffeemaschine nach einem oder mehreren der vorhergehenden Ansprüche, dadurch gekennzeichnet, daß die Kaffeeleitung (7) eine mittels eines Ventiles (20) verschließbare oder freigebbare Ablaßöffnung (19) aufweist.

9. Kaffeemaschine nach einem oder mehreren der vorhergehenden Ansprüche, dadurch gekennzeichnet, daß zur Beschickung des Schließtellers (11) mit Filterpapier (13) eine ansich bekannte Filterpapier-Kassette (18) vorgesehen ist.

10. Kaffeemaschine nach einem oder mehreren der vorhergehenden Ansprüche, dadurch gekennzeichnet, daß mit dem Kurbeltrieb (14) ein Drehwinkelgeber gekoppelt und somit jede Stellung des Ventilkolbens (10) ständig erfaßbar ist.

11. Kaffeemaschine nach einem oder mehreren der vorhergehenden Ansprüche, dadurch gekennzeichnet, daß bei geschlossener Ablaßventilöffnung (4), bei geschlossener Einfüllventilöffnung (2) und bei geöffnetem Ventil (20) in der Ablaßöffnung (19) der Kaffeeleitung (7) Druckluft in die Brühkammer (1) förderbar ist.

## Claims

1. A coffee-making machine having an infusion chamber (1) which has a filling valve opening (2), a filling connection (3), a discharge valve opening (4) to an outlet (5), an opening (6) to a coffee conduit (7) and an infusion water feed (8), and in which a stationary support strainer (9) and a plunger (10) for controlling the infusion process are displaceably arranged, wherein the support strainer (9) separates a catch space (23) for coffee infusion around the opening (6) of the coffee conduit (7) from the remainder of the infusion chamber, characterised in that the plunger (10) is arranged outside the surface area of the support strainer (9) and the discharge valve opening (4) is arranged to extend above the support strainer (9) transversely with respect to the longitudinal axis of the plunger (10).

2. A coffee-making machine according to claim 1 characterised in that the infusion chamber (1) is divided in the region beneath the support strainer (9) and has a closure plate member (11) which is movable relative to the remainder of the infusion chamber (1) and at the lowest point of which is arranged the opening (6) of the coffee conduit (7) and which has a support for a filter paper (13) in its upper edge region (12) which can be pressed sealingly against the wall of the infusion chamber.

3. A coffee-making machine according to claim 1 or claim 2 characterised in that the support strainer (9) is flat and is disposed to lie horizontally in the infusion chamber (1).

4. A coffee-making machine according to one or more of the preceding claims characterised in that a cleaning water opening (15) opens into the infusion chamber (1) above the support strainer (9) and parallel to the support strainer (9).

5. A coffee-making machine according to claim 4 characterised in that the cleaning water opening (15) is in diametrally opposite relationship to the discharge valve opening (4).

6. A coffee-making machine according to one or more of the preceding claims characterised in that the plunger (10) and the closure plate member (11) are connected to a common crank drive (14) and are thus mechanically coupled in regard to their possible displacements.

7. A coffee-making machine according to claim 6 characterised in that the closure plate member (11) is controlled by means of a cam disc actuated by the crank drive (14).

8. A coffee-making machine according to one or more of the preceding claims characterised in that the coffee conduit (7) has an outlet opening (19) which can be closed or opened by means of a valve (20).

9. A coffee-making machine according to one or more of the preceding claims characterised in that a per se known filter paper cassette (18) is provided for loading the closure plate member (11) with filter paper (13).

10. A coffee-making machine according to one or more of the preceding claims characterised in that a rotary angle sensor is coupled to the crank drive (14) and thus any position of the plunger (10) can be constantly detected.

11. A coffee-making machine according to one or more of the preceding claims characterised in that, when the discharge valve opening (4) is closed, when the inlet valve opening (2) is closed and when the valve (20) in the discharge opening (19) of the coffee conduit (7) is open, compressed air can be passed into the infusion chamber (1).


**Revendications**

1. Machine à café munie d'une chambre d'infusion (1), qui comporte un orifice de soupape de remplissage (2), une trémie de remplissage (3), une ouverture de soupape de décharge (4) conduisant à un orifice de sortie (5), un orifice (6) d'une conduite de café (7) et une arrivée d'eau d'infusion (8) et sur laquelle sont installés, avec mouvement de translation possible, un filtre support (9) fixe, ainsi qu'un piston de soupape (10) commandant l'opération d'infusion, le filtre support (9) séparant un espace de réception (23) pour le café infusé, situé autour de l'orifice (6) de la conduite de café (7), du reste de la chambre d'infusion, machine caractérisée en ce que le piston de soupape (10) est placé en dehors de la surface de base du filtre porteur (9) et l'ouverture de la soupape de décharge (4) est disposée au-dessus du filtre support (9) transversalement à l'axe longitudinal du piston de soupape (10).

2. Machine à café selon la revendication 1, caractérisée en ce que la chambre d'infusion (1) est divisée dans la zone en-dessous du filtre support (9) et comprend un disque de fermeture (11) mobile vis à vis du reste de la chambre d'infusion (1), en ce que l'ouverture (6) de la conduite de café (7) est placée au point le plus bas du disque de fermeture et en ce que le disque de fermeture dans sa zone de bord (12) supérieure pouvant s'appuyer de façon étanche contre la paroi de la chambre d'infusion, comporte un appui pour un papier filtre (13).

3. Machine à café selon les revendications 1 ou 2, caractérisée en ce que le filtre support (9) est réalisé plat et est monté horizontal dans la chambre d'infusion (1).

4. Machine à café selon une ou plusieurs des revendications précédentes, caractérisée en ce qu'une ouverture d'eau de nettoyage (15) débouche dans la chambre d'infusion (1) au-dessus du filtre support (9) et parallèlement au filtre support (9).

5. Machine à café selon la revendication 4, caractérisée en ce que l'ouverture d'eau de nettoyage (15) est située diamétralement opposée à l'ouverture de la soupape de décharge (4).

6. Machine à café selon une ou plusieurs des revendications précédentes, caractérisée en ce que le piston de soupape (10) et le disque de fermeture (11) sont liés à une commande à manivelle (14) commune et ainsi sont couplés mécaniquement en vue de leurs mouvements de translation possibles.

7. Machine à café selon la revendication 6, caractérisée en ce que le disque de fermeture (11) est commandé au moyen d'un disque à cames actionné par une commande à manivelle (14).

8. Machine à café selon une ou plusieurs de revendications précédentes, caractérisée en ce que la conduite de café (7) comporte une ouverture de décharge (19) pouvant être ouverte ou fermée au moyen d'une soupape (20).

9. Machine à café selon une ou plusieurs des revendications précédentes, caractérisée en ce qu'une cassette pour papier filtre (18) connue en soit, est prévue pour recouvrir le disque de fermeture (11) avec du papier filtre (13).

10. Machine à café selon une ou plusieurs des revendications précédentes, caractérisée en ce qu'un indicateur d'angle de rotation est couplé à la commande à manivelle (14) et ainsi chaque position du piston de soupape (10) est constamment détectable.

11. Machine à café selon une ou plusieurs des revendications précédentes, caractérisée en ce qu'avec l'orifice de la soupape de décharge (4) fermé, avec l'orifice de la soupape de remplissage (2) fermé et avec la soupape (20) ouverte dans l'ouverture de décharge (19) de la conduite de café (7), de l'air comprimé est envoyé dans la chambre d'infusion (1).

Fig. 1

Fig. 2

EP 0 334 140 B1

Fig. 3

Fig. 4

Fig. 5